# EUROPEAN PATENT APPLICATION

(11) **EP 3 386 233 A1**
(43) Date of publication of application: **10.10.2018**
(21) Application number: 17198679.7
(22) Date of filing: 26.10.2017
(51) Int. Cl.: H04W 24/04

(54) **MOBILE DEVICE RECORDING FOR TROUBLESHOOTING ASSISTANCE**

(30) Priority: 04.04.2017 US 201715479201
(71) Applicant: Aruba Networks, Inc., Santa Clara, CA 95054 (US)
(72) Inventor: VADLAMUDI, Vinod kumar, Santa Clara, CA 95054 (US)
(74) Representative: HGF Limited

(57) **Abstract**

In some examples, a method includes capturing, with a mobile device during a troubleshooting period, device presentation information for the mobile device; recording, using a microphone of the mobile device during the troubleshooting period, live audio; recording, using the mobile device during the troubleshooting period, device information for the mobile device; capturing, using an antenna of the mobile device during the troubleshooting period, live wireless Radio Frequency (RF) information for the mobile device; and transmitting the recorded live screen capture information, the recorded live audio, the recorded device information, and wireless RF information based on the captured live wireless RF information to a remote troubleshooting service to assist in troubleshooting.

## Description

### BACKGROUND

Wireless networking can allow mobile devices, such as certain smartphones, laptops, tablets, or other suitable computing devices, to wirelessly communicate with other devices. In some wireless networks, a mobile device can rely on wireless infrastructure to access a local area network, a remote network, or for other mobililty related services. In some situations, a mobile device user may experience issues with the network or network services and may seek customer support for assistance.

### BRIEF DESCRIPTION OF DRAWINGS

FIG. 1 is a diagram of a network environment including a mobile device with a troubleshooting recording module, according to an example.
FIG. 2 is a diagram of a network environment including multiple users using mobile devices with troubleshooting recording modules, according to an example.
FIG. 3 is a flowchart for a method, according to an example.
FIG. 4 is a diagram of a computing device, according to an example.
FIG. 5 is a diagram of machine-readable storage medium, according to an example.
FIG. 6 is a diagram of machine-readable storage medium, according to another example.

### DETAILED DESCRIPTION

The following discussion is directed to various examples of the disclosure. Although one or more of these examples may be preferred, the examples disclosed herein should not be interpreted, or otherwise used, as limiting the scope of the disclosure, including the claims. In addition, the following description has broad application, and the discussion of any example is meant only to be descriptive of that example, and not intended to intimate that the scope of the disclosure, including the claims, is limited to that example. Throughout the present disclosure, the terms "a" and "an" are intended to denote at least one of a particular element. In addition, as used herein, the term "includes" means includes but not limited to, the term "including" means including but not limited to. The term "based on" means based at least in part on.

In some wireless networks, a mobile device can rely on wireless infrastructure to access a local area network, a remote network, or for other mobililty-related services. In some situations, a mobile device user may experience issues with the network or services and may seek customer support for assistance. Some network or network service providers may provide on-device, local, or remote troubleshooting assistance. However, such troubleshooting may be challenging because a root cause of an issue or the determination of a remedy may be based on one or more factors beyond the knowledge of either the user, the troubleshooting provider, or both.

Certain implementations of the present disclosure are directed to mobile device recording for troubleshooting assistance. As described in further detail below, in some implementations of the present disclosure, a mobile device may include a microphone, an antenna, a display, a processing resource, and a memory resource. The memory resource may store machine readable instructions to cause the processing resource to: (1) capture, during a troubleshooting period, troubleshooting content displayed on the display; (2) record, using the microphone during the troubleshooting period, troubleshooting-related audio; (3) capture device information related to the model of the mobile device; (4) capture, using the antenna during the troubleshooting period, troubleshooting-related wireless Radio Frequency (RF) information; and (5) transmit the captured troubleshooting content displayed on the display, the recorded troubleshooting-related audio, the captured device information, the live screen capture information, the recorded live audio, the recorded device information, and wireless RF information based on the captured troubleshooting-related wireless RF information to a remote troubleshooting service to assist in troubleshooting. Some implementations of the present disclosure may provide a user with a simple, easy way to enable troubleshooting of issues relating to usage of the mobile device in a network environment, whether the issues arise from the wireless network, the network service, the mobile device, etc. Other advantages of implementations presented herein will be apparent upon review of the description and figures.

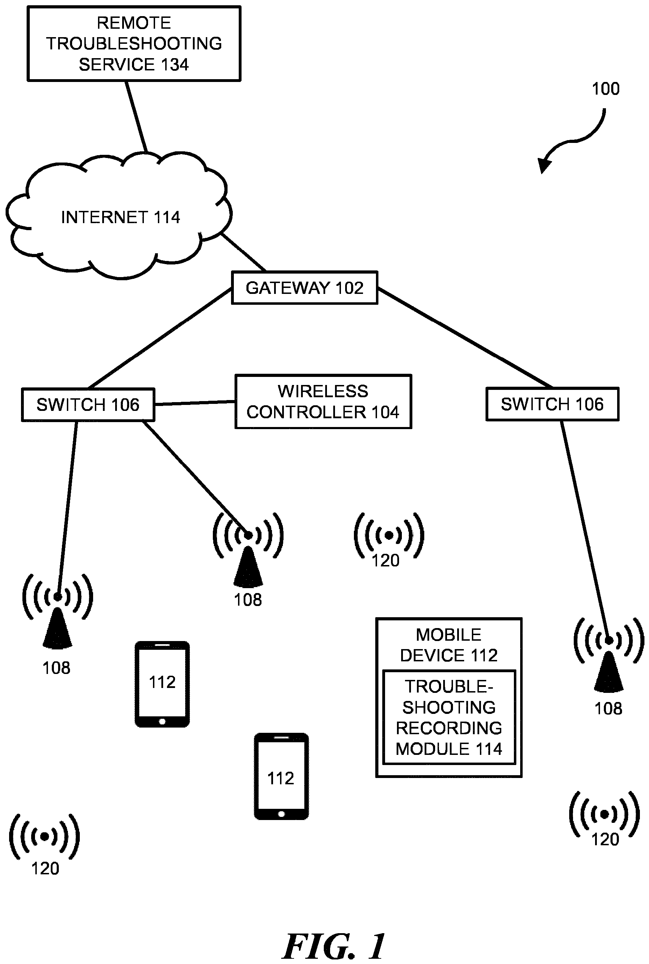

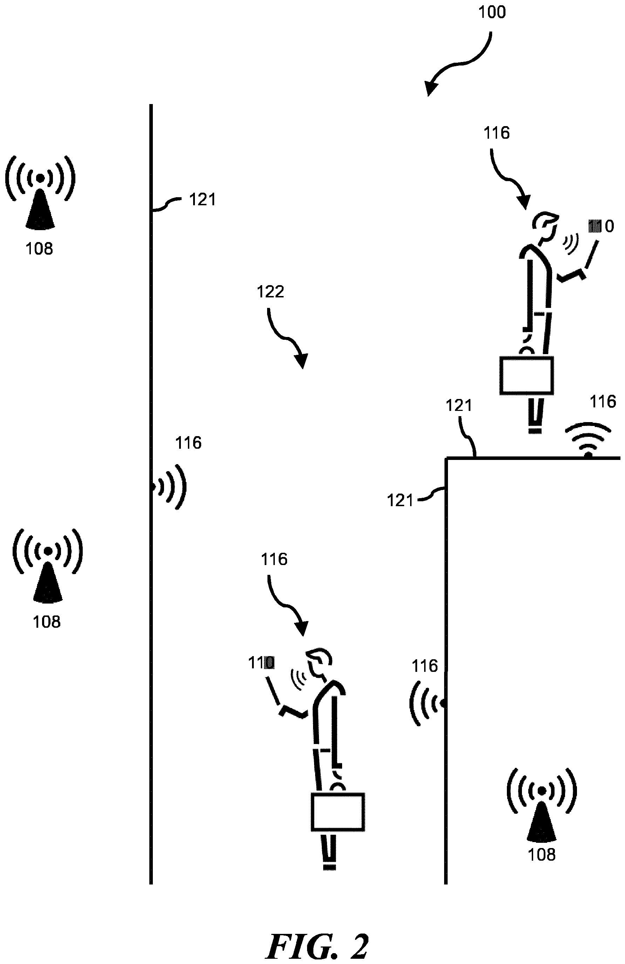

FIGs. 1 and 2 are diagrams of an example network environment 100. In FIG. 1, environment 100 includes a local area network portion including a gateway 102, a wireless controller 104, various switches 106, various Access Points (APs) 108, beacons 120, and various mobile devices 110 as well as a remote area network portion including Internet 112 and remote trouble shooting service 134 connected to Internet 112. In environment 100 of FIG. 1, at least one of mobile devices 110 includes a troubleshooting recording module 114 as described in further detail below. FIG. 2 depicts environment 100 with multiple users 116, their respective mobile devices 110 which include respective troubleshooting recording modules 114, and various infrastructure devices, such as various APs 108 and beacons 120. Beacons 120 can, for example, be mounted or otherwise affixed to interior walls 121 within example hallways 122 of environment 100 and APs 108 can be placed in any suitable location within environment 100. The structure and functionality of the various aspects of environment 100 are described in further detail below.

The terms "access point" or "AP" as used herein, can, for example, refer to networking hardware devices that allow a Wi-Fi compliant device to connect to a wired network. Such an AP 108 may be connected to an upstream wired device, such as switch 106, wireless controller 104, etc., via an Ethernet connection and may provide one or more downstream wireless connections using Radio Frequency (RF) links for mobile devices 110 to use a wired connection. AP 108 can support one or more industry standards for sending and receiving data using these radio frequencies, such as the Institute of Electrical and Electronics Engineers (IEEE) 802.11 standard or other suitable standards. AP 108 can, for example, be in the form of a standalone device connected to a gateway (e.g., gateway 102), router, or other intermediate datapath device. In some implementations, AP 108 may be an integral component of such an intermediate datapath device or other network equipment.

As used herein, term "wireless beacon" can, for example, refer to a device that can assist with location or proximity detection by emitting and receiving beacon signals. Such beacons can, for example, rely on Bluetooth (e.g., Bluetooth Low Energy (BLE)), or any other suitable wireless technology. Such a wireless beacon can, for example, be powered by battery, plugged into a power source, e.g., a wall outlet, a Universal Serial Bus (USB) port, etc., or another suitable source of power. In some implementations, other devices within environment 100 may function as a beacon in addition to another mode. For example, in some implementations, a mobile device 110, an AP 108 or another suitable device within environment 100 may function as a wireless beacon when placed in a "beacon mode" or in default use in parallel with other functions.

As used herein, the term "wireless controller" can, for example, refer to any suitable entity that handles control and management functions of a network or equipment thereof. For example, wireless controller 104 can be used to control one or more aspects of APs 108, such as channel assignment, beamforming, radio resource management (RRM), etc. In some implementations, applications can run on wireless controller 104 or on other devices on the network (or otherwise in communication with the network) to meet customer use cases, such as to achieve a desired throughput (or another Quality of Service (QoS)) over the network, enforce security provisions or access control policies for the network, or provide another suitable service or functionality.

In some implementations, wireless controller 104 can allow for the decoupling of traffic routing control decisions (e.g., which port of a given switch should be used to forward traffic to a given destination) from the network's physical infrastructure. For example, in some implementations, wireless controller 104 can be in the form of an SDN controller and switches 106 can be in the form of SDN-enabled switches that are within the control domain of the SDN controller. In some environments, one or more network nodes within environment 100 may be deemed to be "controlled" by another device, such as wireless controller 104. As used herein, the term "controlled" can, for example, refer to devices within the control domain of the wireless controller 104 or otherwise controllable by wireless controller 104. Such a controlled node can, for example, communicate with wireless controller 104 and can allow wireless controller 104 to manage the node in accordance with a protocol. For example, an OpenFlow-compatible switch controlled by a wireless controller 104 with SDN capabilities may permit controller 104 to add, update, and delete flow entries in flow tables of switch 106 using suitable commands.

In some network environments, a data packet may be routed from a given switch 106 to a given mobile device 110 through one or more data paths that may include wireless links (e.g., a wireless link between AP 108 and mobile device 110). For example, in some network environments, a data packet may be routed to mobile device 110 along a first datapath that uses a first AP 108 or alternatively along a second datapath that uses a second AP 108. A given data path for data packets within environment 100 can be determined by wireless controller 104 (or another entity, such as by a network administrator, by datapath nodes themselves, etc.) based on one or more static parameters (e.g., link speeds, number of hops between nodes, etc.) and can further (or alternatively) be based on one or more dynamic parameters (e.g., QoS, network latency, network throughput, network power consumption, etc.).

Network nodes within environment 100 can forward traffic along a datapath based on metadata within the traffic. For example, traffic in the form of a packet can be received at switch 106 (or another suitable intermediary network node). For consistency, the industry term "packet" is used throughout this description, however, it is appreciated that the term "packet" as used herein can refer to any suitable protocol data unit (PDU). Such a packet can, for example, include payload data as well as metadata in the form of control data. Control data can, for example, provide data to assist the network node with reliably delivering payload data. For example, control data can include network addresses for source and destination nodes (e.g., mobile device 110), error detection codes, sequencing information, packet size of the packet, a time-to-live (TTL) value, etc. In contrast, payload data can include data carried on behalf of an application for use by source and destination nodes.

Mobile devices 110 can, for example, be in the form of network hosts or other types of network nodes. Mobile devices 110 are depicted as mobile phones in FIGs. 1 and 2, however such clients can be in the form of any suitable device that can transmit and receive wireless data with an AP 108. For example, in some implementations, mobile devices 110 can be in the form of suitable tablets, laptops, servers, desktop computers, printers, APs, wireless sensors, beacons, Internet of Things (IoT) devices, wireless clients, etc. In certain implementations, one or more mobile devices 110 can be in the form of a desktop computer including a monitor for presenting information to an operator and a keyboard and mouse for receiving input from an operator and one or more mobile devices 110 can be in the form of smart phones. It is appreciated that mobile devices 110 can be endpoint nodes of environment 100 (such as depicted in FIGs. 1 and 2), intermediate nodes between endpoint nodes, or positioned at other logical or physical locations within environment 100.

Various intermediary nodes within the network environment can, for example, be in the form of switches (e.g., switches 106) or other multi-port network bridges that process and forward data at the data link layer. In some implementations, one or more of the nodes can be in the form of multilayer switches that operate at multiple layers of the Open Systems Connection (OSI) model (e.g., the data link and network layers). Although the term "switch" is used throughout this description, it is appreciated that this term can refer broadly to other suitable network data forwarding devices. For example, a general purpose computer can include suitable hardware and machine-readable instructions that allow the computer to function as a network switch. It is appreciated that the term "switch" can include other network datapath elements in the form of suitable routers, gateways and other devices that provide switch-like functionality for the network. Gateway 102 can, for example, be in the form of a network node that acts as an entrance to another network, such as Internet 112 or another suitable Wide Area Network (WAN) or Local Area Network (LAN).

The various nodes within network environment 100 are connected via one or more wired data channels (shown in solid lines), which can, for example be in the form of data cables, such as an Ethernet cable. Although a single link (i.e., a single line in FIG. 1) between each network node is illustrated, it is appreciated that each single link may include multiple wires or other wired data channels. Moreover, wireless controller 104 may be connected to APs 108 via logical control channels, and may be directly connected to only one or a few APs, while being indirectly connected to other nodes of the network. For example, wireless controller 104 can be directly connected to a first AP via an Ethernet cable, while being indirectly connected to a second AP (e.g., by relying on the first AP to wireless communicate to the second AP control signals for the second AP or via a wired connection between the first and second APs). In certain implementations, the functionality and/or equipment for wireless controller 104 can reside within Internet 112 or another network.

In the example environment 100 depicted in FIGs. 1 and 2, the various network nodes are in the form of intermediary nodes (e.g., switches 106, gateway 102, APs 108), a controller node (e.g., wireless controller 104), and host devices (mobile devices 110). It is appreciated however, that the implementations described herein can be used or adapted for networks including more or fewer devices, different types of devices, and different network arrangements. As an example, in some implementations, wireless controller 104 may operate as an intermediary node or a host device. As another example, in some implementations, such as in certain mesh networks, a backhaul of the network may be wireless instead of wired. In such an implementation, an AP may wirelessly relay data to another AP that is connected to the wired backbone, to thereby use a wireless link between two APs as a wireless backhaul.

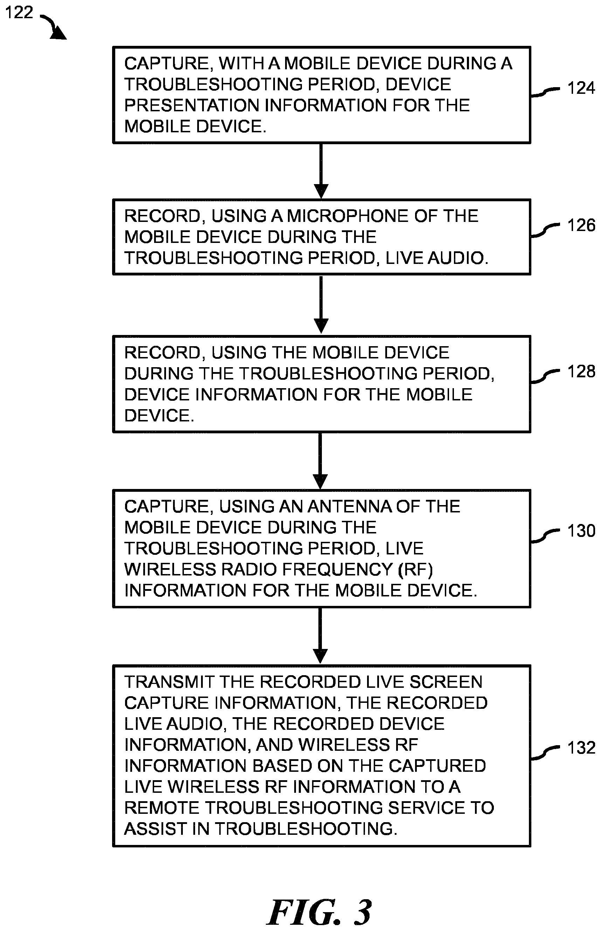

FIG. 3 depicts a flowchart for an example method 122 related to mobile device recording for troubleshooting assistance. For illustration, the description of method 122 and its component steps make reference to the example network environment 100 of FIGs. 1 and 2 and elements thereof, such as for example APs 108, mobile devices 110, etc. However, it is appreciated that method 122 or aspects thereof can be used or otherwise applicable for any suitable network or network element described herein or otherwise. For example, method 122 can be applied to an environment 100 with a different number of APs 108, mobile devices 110, etc.

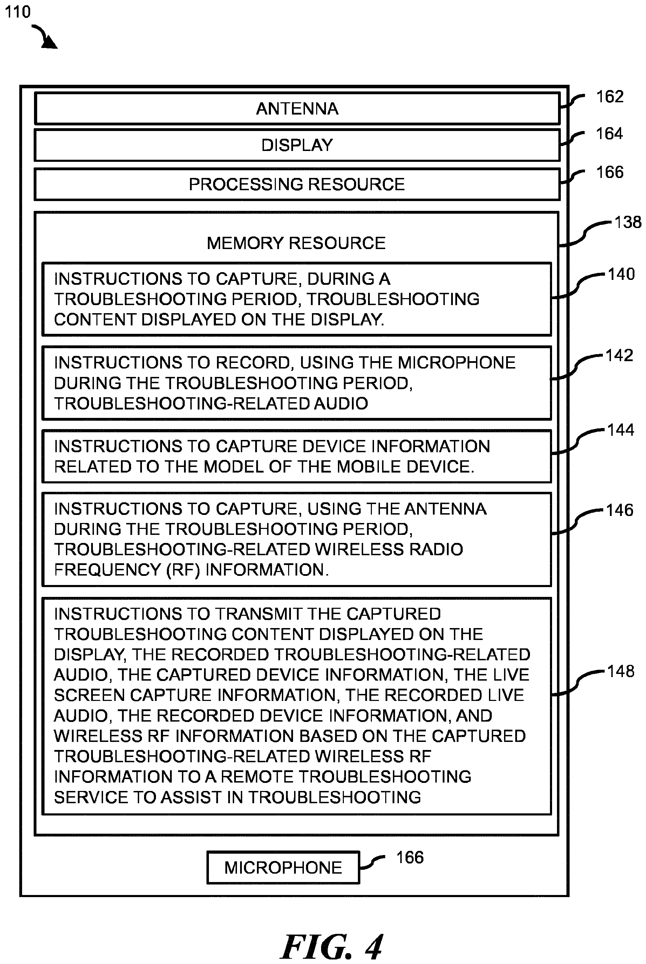

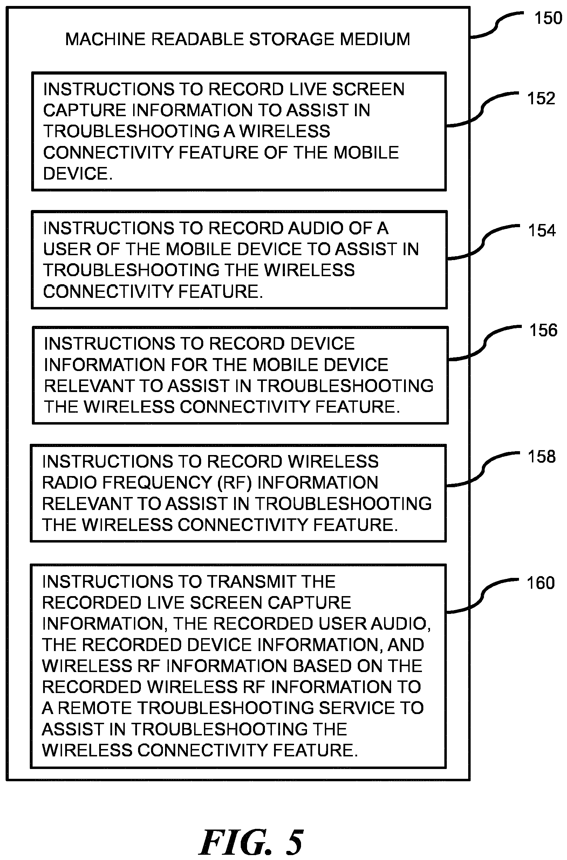

In some implementations, method 122 can be implemented or otherwise executed through the use of executable instructions stored on a memory resource (e.g., the memory resource of the computing device of FIG. 4), executable machine readable instructions stored on a storage medium (e.g., the medium of FIG. 5), in the form of electronic circuitry (e.g., on an Application-Specific Integrated Circuit (ASIC)), and/or another suitable form. Although the description of method 122 herein primarily refers to steps performed on mobile device 110 for purposes of illustration, it is appreciated that in some implementations, method 122 can be executed on another suitable computing device within network environment 100.

Method 122 includes capturing (at block 124) with mobile device 110 during a troubleshooting period, device presentation information for mobile device 110. Such device presentation information can, for example, be any suitable information presented to user 116. For example, in some implementations such information can be in the form of visual information, such as the content of a display screen of mobile device 110. In such implementations, the content of the display screen can be captured at block 124 in the form of a single screenshot, a series of screenshots, a video capture, etc. It is appreciated that the screenshot can be an entire display screen of mobile device 110 or a suitable portion thereof. In some implementations, device presentation information can be in the form of non-visual information, such as audio information (e.g., with block 124 capturing audio emitted from a speaker or generated by an internal audio engine of mobile device 110) or other suitable information emitted from or generated by mobile device 110 (e.g., transmissions from one or more transmitters of mobile device 110).

Mobile devices 110 are depicted as mobile phones in FIGs. 1 and 2, however such clients can be in the form of any suitable device mobile device with suitable capabilities. For example, in some implementations, mobile devices 110 can be in the form of suitable tablets, laptops, Internet of Things (IoT) devices, wireless clients, etc.

As used herein, the term "troubleshooting period" can, for example, refer to a period in which user 116 attempts to troubleshoot an issue. For example, such a troubleshooting period can begin when user 116 initiates a troubleshooting operation on mobile device 110. In some implementations, user 116 can initiate such an operation by clicking an on-screen button or hardware button on mobile device 110. It is appreciated that in some implementations, initiating the troubleshooting operation can be performed remotely (e.g., using a remote control to begin an operation on mobile device 110). In some implementations, initiating a troubleshooting operation can be performed automatically at a specific time or day, periodically, or when a specific event occurs, such as when an error or issue occurs. A troubleshooting period can end, for example, when a user interfaces with mobile device 110, such as by clicking an on-screen or hardware button. In some implementations, the troubleshooting period can automatically end after a period of time (e.g., after an hour), at a specific time or day (e.g., at midnight), or when a specific event occurs, such as when an evidence indicates that an error or issue is corrected. For example, a troubleshooting period can end when mobile device 110 determines that network connectivity or a specific network service is restored and is functioning properly.

Method 122 includes recording (at block 126), using a microphone of mobile device 110 during the troubleshooting period, live audio. Such a microphone may be integrated into mobile device 110, such as in implementations where mobile device 110 is in the form of a mobile phone. In some implementations, such a microphone may be a separate unit connected via a wire or wires (e.g., via a plug), wirelessly (e.g., via Bluetooth) to mobile device 110, or through any suitable data connection.

As used herein, the term "recording" can, for example, refer to storing data in a suitable format on a storage medium. Recording and storing of data on storage mediums is described in further detail below with respect to the memory resource of FIG. 5. In some implementations, mobile device 110 can present a prompt to user 116 to provide specific audio relevant for troubleshooting. For example, mobile device 110 may instruct user 116 to record themselves describing circumstances relevant to troubleshooting, such as the user's location. In some implementations, the user may be instructed to describe steps they have already taken to correct an issue. In some implementations, the user may be instructed to describe the circumstances when they first noticed the issue, efforts undertaken to reproduce the issue, or any other suitable information relevant to the issue or troubleshooting the issue.

Method 122 includes recording (at block 128) using the mobile device during the troubleshooting period, device information for the mobile device. The term "device information" can, for example, refer to information about mobile device 110 itself and/or software running on mobile device 110. Such information can, for example, include a version number or related information for an application, operating system, or the like of mobile device 110. In some implementations, the application can be the application performing the operations of method 122. In some implementations, the device information can include an error log, an error code, an error message, or other information related to troubleshooting. In some implementations, device information can be information related to hardware of mobile device 110 itself, such as a model of circuit board, hardware module, brand, model, or other suitable device information.

It is appreciated that "recording" such device information for purposes of block 128 can, for example, include formatting or otherwise preparing such information for later transmission by mobile device 110. The device information can be stored in any suitable format. In some implementations, the device information can, for example, be stored in a plain text format, encrypted, or a combination thereof.

Method 122 includes capturing (at block 130) using an antenna of mobile device 110 during the troubleshooting period, live wireless Radio Frequency (RF) information for mobile device 110. In some implementations, the live wireless RF information can include information related to ambient or active RF information. In some implementations, the live wireless RF information for mobile device 110 indicates nearby wireless networking infrastructure. Such nearby wireless infrastructure can, for example, include APs 108, beacons 120, other mobile devices 110, etc.

In some implementations, live wireless RF information can be determined based on a channel sounding or other suitable operation performed by mobile device 110 and initiated by user 116 manually or automatically initiated at a specific date or time or in response to an event. As used herein, the term "channel sounding" can, for example, refer to a technique to evaluate a radio environment for wireless communication. In some implementations, block 130 can include transmitting a broadband multi-tone test signal. In such an operation, a continuous periodic test sequence that arrives at a receiver can be correlated with an original transmitted sequence. This correlation data or other suitable feedback data may then be analyzed to estimate dynamic channel characteristics. The estimated dynamic channel characteristics can, for example, broadly include characteristics relating to channel frequency, time, and position of devices within the channel. In some implementations, one or more dynamic channel characteristics can include characteristics relating to Direction of departure (DOD), Direction of arrival (DOA), Time delay, Doppler shift, and complex polarimetric path weight matrix.

In some implementations, live wireless RF information may be collected from networking infrastructure, through the use of a Representational state transfer (REST) Application Programming Interface (API) that includes infrastructure (e.g., AP and Beacon) device information in an environment. As used herein, the term "REST" can, for example, refer to a web service that can provide interoperability between computer systems on the Internet or other network. Such a REST-compliant web service can, for example, allow requesting systems to access and manipulate textual representations of network resources or services using a uniform and predefined set of stateless operations. As used herein, network resources or network services can, for example refer to things or entities that can be identified, named, addressed or handled on a network. Requests can, for example, be made to a resource's URI and can elicit a response that may be in XML, HTML, JSON or some other defined format. The wireless RF information may include device information for network infrastructure, such as model number, location, operating parameters, etc.

In some implementations, the captured live wireless RF information for mobile device 110 can be presented or processed in the form of information relating to a Quality of Experience for mobile device 110 within environment 100. As used herein, the term "Quality of Experience" and "QoE" can, for example, refer to a measure of a client's experiences with a service. Such a QoE can, for example, be based on the achievement of one or more quality-of-service ("QoS") metrics. Such, QoS metrics can, for example, refer to acceptable bandwidths, latencies, error rates, jitter rates, and the like. QoE and QoS can, for example, be implemented to help ensure a quality experience when using time-sensitive network services, such as real-time multimedia services including Internet Protocol television (IPTV), video calls, online gaming, security camera streams, Voice over IP (VoIP) traffic, or other services.

Method 122 includes transmitting (at block 132) the recorded live screen capture information, the recorded live audio, the recorded device information, and wireless RF information based on the captured live wireless RF information to remote troubleshooting service 134 to assist in troubleshooting. The troubleshooting can, for example, be related to network connectivity, QoS, etc. In some implementations, the troubleshooting can related to network services, such as blue dot navigation, indoor wayfinding, engagement campaigns, such as push notifications based on proximity to nearby wireless networking infrastructure, etc. Remote troubleshooting service 134 can, for example, be a helpdesk connected to environment 100 via Internet 112. In some implementations, remote troubleshooting service 134 is an automated helpdesk that can receive troubleshooting information and diagnose an issue and initiate a remedy.

In some implementations, method 122 can include capturing with mobile device 110 during the troubleshooting period, a visual image of the environment of mobile device 110. For example, the visual image may be a photograph taken with a camera of mobile device 110 to assist in troubleshooting. In some implementations, the image can be of an AP (e.g., AP 108), which may indicate to a remote troubleshooting service a specific brand or model of AP 108. In some implementations, method 122 can include capturing video using a camera of mobile device 110. The video can, for example, be used to assist in troubleshooting. Such an operation can include capturing an image using a front, back, and/or any other suitable camera of mobile device 110. For example, in some implementations, a front camera can be used to record user 116 describing their issue. It is appreciated that, in some implementations, capturing an image using a camera of the device may be combined with step 126 of recording audio with the device and the resultant recording being transmitted together for troubleshooting purposes. The captured image, as well as the recorded live screen capture information, the recorded live audio, the recorded device information, wireless RF information based on the captured live wireless RF information, may all be transmitted to remote troubleshooting service 134 to assist in troubleshooting.

In some implementations, method 122 can include receiving troubleshooting information from remote troubleshooting service 134. For example, troubleshooting information in the form of recommendations for remedying the issue (e.g., turning mobile device 110 on and off again, initiating a diagnostic on mobile device 110, capturing a photograph of an AP or other network infrastructure may be sent from remote troubleshooting service 134. In some implementations, a video, text, or audio chat feature may be enabled to allow live troubleshooting of an issue.

In some implementations, the transmitting of block 132 can be in the form of a suitable message transmitted between mobile device 110 and remote troubleshooting service 134. The message can, for example, be in the form of an e-mail or other suitable form to exchange digital messages or information. In some implementations, the transmitting of block 132 can include sending a link to a file stored at a remote storage location, such as for example on a cloud storage provider.

It is appreciated that one or more operations of method 122 can be performed periodically. For example, in some implementations, one or more of blocks 124, 126, 128, 130, and 132 (or other operations described herein) may be performed periodically. The various period times for said blocks (or other operations described herein) may be the same or different times. For example, in some implementations, the period of block 130 is every 1 minute and the period of block 132 is every 2 minutes. It is further appreciated, that the period for a given block may be regular (e.g., every 1 minute) or may be irregular (e.g., every 1 minute during a first network condition, and every 2 minutes during a second network condition). In some implementations, one or more of block 124, 126, 128, 130, and 132 (or other operations described herein) may be non-periodic and may be triggered by some network or other event.

Although the flowchart of FIG. 3 shows a specific order of performance, it is appreciated that this order may be rearranged into another suitable order, may be executed concurrently or with partial concurrence, or a combination thereof. Likewise, suitable additional and/or comparable steps may be added to method 122 or other methods described herein in order to achieve the same or comparable functionality. In some implementations, one or more steps are omitted. For example, in some implementations, block 124 of capturing device presentation information can be omitted from method 122 or performed by a different device. It is appreciated that blocks corresponding to additional or alternative functionality of other implementations described herein can be incorporated in method 122. For example, blocks corresponding to the functionality of various aspects of implementations otherwise described herein can be incorporated in method 122 even if such functionality is not explicitly characterized herein as a block in method 122.

FIG. 4 is a diagram of a computing device 110 in accordance with the present disclosure. Mobile device 110 can, for example, be in the form of a mobile device 110 or another suitable computing device within network environment 100 or in communication with network environment 100 or equipment thereof. Mobile device 110 can, for example, include one or more antennas or antenna arrays (e.g., antenna 162), display 164, and microphone 166. Display 164 can, for example be any suitable display for mobile device 110. In some implementations, display 164 can be in the form of a Liquid Crystal Display (LCD), an Organic Light-Emitting Diode (OLED) display, or any suitable type of display. As described in further detail below, mobile device 110 includes a processing resource 136 and a memory resource 138 that stores machine-readable instructions 140,142,144,146, and 148. For illustration, the description of mobile device 110 makes reference to various aspects of the diagrams of FIGs. 1 and 2, as well as method 122 of FIG. 3. However it is appreciated that mobile device 110 can include additional, alternative, or fewer aspects, functionality, etc., than the implementations described elsewhere herein and is not intended to be limited by the related disclosure thereof.

Instructions 140 stored on memory resource 138 are, when executed by processing resource 136, to cause processing resource 136 to capture, during a troubleshooting period, troubleshooting content displayed on the display. Instructions 140 can incorporate one or more aspects of blocks of method 122 or another suitable aspect of other implementations described herein (and vice versa). For example, in some implementations, instructions 140 can include capturing a screenshot or video screen capture of the display of mobile device 110.

Instructions 142 stored on memory resource 138 are, when executed by processing resource 136, to cause processing resource 136 to record, using the microphone during the troubleshooting period, troubleshooting-related audio. Instructions 142 can incorporate one or more aspects of blocks of method 122 or another suitable aspect of other implementations described herein (and vice versa). For example, in some implementations, instructions 142 can include recording troubleshooting-related audio from a user of mobile device 110 explaining circumstances related to the issue.

Instructions 144 stored on memory resource 138 are, when executed by processing resource 136, to cause processing resource 136 to capture device information related to the model of the mobile device. Instructions 144 can incorporate one or more aspects of blocks of method 122 or another suitable aspect of other implementations described herein (and vice versa). For example, in some implementations, instructions 144 can include capture model information and hardware information of mobile device 110

Instructions 146 stored on memory resource 138 are, when executed by processing resource 136, to cause processing resource 136 to capture, using the antenna during the troubleshooting period, troubleshooting-related wireless RF information. Instructions 146 can incorporate one or more aspects of blocks of method 122 or another suitable aspect of other implementations described herein (and vice versa). For example, in some implementations, wireless RF information can be determined based on a channel sounding operation performed by mobile device 110.

Instructions 148 stored on memory resource 138 are, when executed by processing resource 136, to cause processing resource 136 to transmit the captured troubleshooting content displayed on the display, the recorded troubleshooting-related audio, the captured device information, the live screen capture information, the recorded live audio, the recorded device information, and wireless RF information based on the captured troubleshooting-related wireless RF information to a remote troubleshooting service to assist in troubleshooting. Instructions 148 can incorporate one or more aspects of blocks of method 122 or another suitable aspect of other implementations described herein (and vice versa). For example, in some implementations, instructions 148 are, when executed by processing resource 136, to cause processing resource 136 to transmit information via an e-mail message.

Processing resource 136 of mobile device 110 can, for example, be in the form of a central processing unit (CPU), a semiconductor-based microprocessor, a digital signal processor (DSP) such as a digital image processing unit, other hardware devices or processing elements suitable to retrieve and execute instructions stored in memory resource 138, or suitable combinations thereof. Processing resource 136 can, for example, include single or multiple cores on a chip, multiple cores across multiple chips, multiple cores across multiple devices, or suitable combinations thereof. Processing resource 136 can be functional to fetch, decode, and execute instructions as described herein. As an alternative or in addition to retrieving and executing instructions, processing resource 136 can, for example, include at least one integrated circuit (IC), other control logic, other electronic circuits, or suitable combination thereof that include a number of electronic components for performing the functionality of instructions stored on memory resource 138. The term "logic" can, in some implementations, be an alternative or additional processing resource to perform a particular action and/or function, etc., described herein, which includes hardware, e.g., various forms of transistor logic, application specific integrated circuits (ASICs), etc., as opposed to machine executable instructions, e.g., software firmware, etc., stored in memory and executable by a processor. Processing resource 136 can, for example, be implemented across multiple processing units and instructions may be implemented by different processing units in different areas of mobile device 110.

Memory resource 138 of mobile device 110 can, for example, be in the form of a non-transitory machine-readable storage medium, such as a suitable electronic, magnetic, optical, or other physical storage apparatus to contain or store information such as machine-readable instructions 140,142,144,146, and 148. Such instructions can be operative to perform one or more functions described herein, such as those described herein with respect to method 122 or other methods described herein. Memory resource 138 can, for example, be housed within the same housing as processing resource 136 for mobile device 110, such as within a computing tower case for mobile device 110 (in implementations where mobile device 110 is housed within a computing tower case). In some implementations, memory resource 138 and processing resource 136 are housed in different housings. As used herein, the term "machine-readable storage medium" can, for example, include Random Access Memory (RAM), flash memory, a storage drive (e.g., a hard disk), any type of storage disc (e.g., a Compact Disc Read Only Memory (CD-ROM), any other type of compact disc, a DVD, etc.), and the like, or a combination thereof. In some implementations, memory resource 138 can correspond to a memory including a main memory, such as a Random Access Memory (RAM), where software may reside during runtime, and a secondary memory. The secondary memory can, for example, include a nonvolatile memory where a copy of machine-readable instructions are stored. It is appreciated that both machine-readable instructions as well as related data can be stored on memory mediums and that multiple mediums can be treated as a single medium for purposes of description.

Memory resource 138 can be in communication with processing resource 136 and/or other elements of mobile device 110 via a suitable communication link. Such a communication link can, for example, be local or remote to a machine (e.g., a computing device) associated with processing resource 136. Examples of a local communication link can include an electronic bus internal to a machine (e.g., a computing device) where memory resource 138 is one of volatile, non-volatile, fixed, and/or removable storage medium in communication with processing resource 136 via the electronic bus.

In some implementations, one or more aspects of mobile device 110 can be in the form of functional modules that can, for example, be operative to execute one or more processes of instructions 140, 142, 144, 146, and 148 or other functions described herein relating to other implementations of the disclosure. As used herein, the term "module" refers to a combination of hardware (e.g., a processor such as an integrated circuit or other circuitry) and software (e.g., machine- or processor-executable instructions, commands, or code such as firmware, programming, or object code). A combination of hardware and software can include hardware only (i.e., a hardware element with no software elements), software hosted at hardware (e.g., software that is stored at a memory and executed or interpreted at a processor), or hardware and software hosted at hardware. It is further appreciated that the term "module" is additionally intended to refer to one or more modules or a combination of modules. Each module of mobile device 110 can, for example, include one or more machine-readable storage mediums and one or more computer processors.

In view of the above, it is appreciated that the various instructions of mobile device 110 described above can correspond to separate and/or combined functional modules. For example, instructions 140, 142, 144, 146, and 148 can correspond to a "troubleshooting recording module" (e.g., module 114 of FIG. 1), which can, for example, capture various aspects of mobile device 110 and its environment, such as a user's screen, along with audio, video, RF information, and other troubleshooting information to assist in diagnosing issues. Likewise, instructions 148 can correspond to a transmission module including an antenna array to transmit a transmit stream. It is further appreciated that a given module can be used for multiple functions. As but one example, in some implementations, a single module can be used to both capture device presentation information as well as to capture live wireless RF information.

FIG. 5 illustrates a machine-readable storage medium 150 including various instructions that can be executed by a computer processor or other processing resource. In some implementations, medium 150 can be housed within a mobile device 110, or on another suitable computing device within network environment 100. For illustration, the description of machine-readable storage medium 150 provided herein makes reference to various aspects of mobile device 110 (e.g., processing resource 136) and other implementations of the disclosure (e.g., method 122). Although one or more aspects of mobile device 110 (as well as instructions such as instructions 140, 142, 144, 146, and 148) can be applied to or otherwise incorporated with medium 150, it is appreciated that in some implementations, medium 150 may be stored or housed separately from such a system. For example, in some implementations, medium 150 can be in the form of Random Access Memory (RAM), flash memory, a storage drive (e.g., a hard disk), any type of storage disc (e.g., a Compact Disc Read Only Memory (CD-ROM), any other type of compact disc, a DVD, etc.), and the like, or a combination thereof.

Medium 150 includes machine-readable instructions 152 stored thereon to cause processing resource 136 to record live screen capture information to assist in troubleshooting a wireless connectivity feature of the mobile device. Instructions 152 can, for example, incorporate one or more aspects of block 124 of method 122 or another suitable aspect of other implementations described herein (and vice versa). For example, in some implementations, the wireless connectivity feature is indoor wayfinding using nearby wireless networking infrastructure.

Medium 150 includes machine-readable instructions 154 stored thereon to cause processing resource 136 to record audio of a user of mobile device 110 to assist in troubleshooting the wireless connectivity feature. Instructions 154 can, for example, incorporate one or more aspects of block 126 of method 122 or another suitable aspect of other implementations described herein (and vice versa). For example, in some implementations, instructions 154 can include using a microphone (e.g., microphone 166) integrated in mobile device 110 to record audio.

Medium 150 includes machine-readable instructions 156 stored thereon to cause processing resource 136 to record device information for mobile device 110 relevant to assist in troubleshooting the wireless connectivity feature. Instructions 156 can, for example, incorporate one or more aspects of block 128 of method 122 or another suitable aspect of other implementations described herein (and vice versa). For example, in some implementations, the recorded device information can include application version number for an application installed on mobile device 110.

Medium 150 includes machine-readable instructions 158 stored thereon to cause processing resource 136 to record wireless RF information relevant to assist in troubleshooting the wireless connectivity feature. Instructions 158 can, for example, incorporate one or more aspects of block 130 of method 122 or another suitable aspect of other implementations described herein (and vice versa). For example, in some implementations, the recorded wireless RF information can include a number of APs or beacons within range of mobile device 110.

Medium 150 includes machine-readable instructions 160 stored thereon to cause processing resource 136 to transmit the recorded live screen capture information, the recorded user audio, the recorded device information, and wireless RF information based on the recorded wireless RF information to a remote troubleshooting service to assist in troubleshooting the wireless connectivity feature. Instructions 160 can, for example, incorporate one or more aspects of block 132 of method 122 or another suitable aspect of other implementations described herein (and vice versa). For example, in some implementations, instructions 160 can cause processing resource 136 to instruct, in response to the remote troubleshooting service receiving transmitted troubleshooting information, the user to perform an action to assist in troubleshooting, such as to capture an image of networking infrastructure or to move location.

While certain implementations have been shown and described above, various changes in form and details may be made. For example, some features that have been described in relation to one implementation and/or process can be related to other implementations. In other words, processes, features, components, and/or properties described in relation to one implementation can be useful in other implementations. Furthermore, it should be appreciated that the systems and methods described herein can include various combinations and/or sub-combinations of the components and/or features of the different implementations described. Thus, features described with reference to one or more implementations can be combined with other implementations described herein.

As used herein, "logic" is an alternative or additional processing resource to perform a particular action and/or function, etc., described herein, which includes hardware, e.g., various forms of transistor logic, application specific integrated circuits (ASICs), etc., as opposed to machine executable instructions, e.g., software firmware, etc., stored in memory and executable by a processor. Further, as used herein, "a" or "a number of" something can refer to one or more such things. For example, "a number of widgets" can refer to one or more widgets. Also, as used herein, "a plurality of" something can refer to more than one of such things.

## Claims

1. A method comprising:
capturing, with a mobile device during a troubleshooting period, device presentation information for the mobile device;
recording, using a microphone of the mobile device during the troubleshooting period, live audio;
recording, using the mobile device during the troubleshooting period, device information for the mobile device;
capturing, using an antenna of the mobile device during the troubleshooting period, live wireless Radio Frequency (RF) information for the mobile device; and
transmitting the recorded live screen capture information, the recorded live audio, the recorded device information, and wireless RF information based on the captured live wireless RF information to a remote troubleshooting service to assist in troubleshooting.

2. The method of claim 1, wherein the device presentation information is a screenshot of the display of the mobile device.

3. The method of either of claims 1 and 2, wherein the device presentation information is a screen video recording of the display of the mobile device.

4. The method of any of claims 1 to 3, wherein the live wireless RF information for the mobile device indicates nearby wireless networking infrastructure.

5. The method of claim 4, wherein the wireless networking infrastructure includes a wireless Access Point (AP).

6. The method of any of claims 1 to 5, wherein the wireless networking infrastructure includes a wireless beacon.

7. The method of any of claims 1 to 6, further comprising:
recording, with the mobile device during the troubleshooting period, an image using a camera of the mobile device; and
transmitting the recorded live screen capture information, the recorded live audio, the recorded device information, wireless RF information based on the captured live wireless RF information, and the recorded image to a remote troubleshooting service to assist in troubleshooting.

8. The method of any of claims 1 to 7, wherein the audio recorded by the device is audio from a user to explain circumstances relevant to troubleshooting.

9. The method of any of claims 1 to 8, wherein the troubleshooting is related to wireless location determination using nearby wireless networking infrastructure.

10. The method of any of claims 1 to 9, wherein the troubleshooting is related to push notifications based on proximity to nearby wireless networking infrastructure.

11. A non-transitory machine readable storage medium having stored thereon machine readable instructions to cause a computer processor of a mobile device to:
record live screen capture information to assist in troubleshooting a wireless connectivity feature of the mobile device;
record audio of a user of the mobile device to assist in troubleshooting the wireless connectivity feature;
record device information for the mobile device relevant to assist in troubleshooting the wireless connectivity feature;
record wireless Radio Frequency (RF) information relevant to assist in troubleshooting the wireless connectivity feature; and
transmit the recorded live screen capture information, the recorded user audio, the recorded device information, and wireless RF information based on the recorded wireless RF information to a remote troubleshooting service to assist in troubleshooting the wireless connectivity feature.

12. The medium of claim 11, wherein the wireless connectivity feature is indoor wayfinding using nearby wireless networking infrastructure.

13. The medium of either of claims 11 and 12, wherein the medium has machine readable instructions stored thereon to cause the computer processor to:
instruct, in response to the remote troubleshooting service receiving transmitted troubleshooting information, the user to perform an action to assist in troubleshooting.

14. A mobile device comprising:
a microphone;
an antenna;
a display;
a processing resource; and
a memory resource storing machine readable instructions to cause the processing resource to:
capture, during a troubleshooting period, troubleshooting content displayed on the display;
record, using the microphone during the troubleshooting period, troubleshooting-related audio;
capture device information related to the model of the mobile device;
capture, using the antenna during the troubleshooting period, troubleshooting-related wireless Radio Frequency (RF) information; and
transmit the captured troubleshooting content displayed on the display, the recorded troubleshooting-related audio, the captured device information, the live screen capture information, the recorded live audio, the recorded device information, and wireless RF information based on the captured troubleshooting-related wireless RF information to a remote troubleshooting service to assist in troubleshooting.

15. The mobile device of claim 14, wherein the wireless RF information indicates the presence of nearby wireless communication infrastructure.
